# EUROPÄISCHE PATENTSCHRIFT

(11) **EP 2 277 724 B1**
(45) Veröffentlichungstag und Bekanntmachung des Hinweises auf die Patenterteilung: **20.11.2013**
(21) Anmeldenummer: 10006839.4
(22) Anmeldetag: 02.07.2010
(51) Int. Cl.: B60D 1/06, B60D 1/54

(54) **Anhängekupplung**
Tow bar
Attelage

(30) Priorität: 20.07.2009 DE 102009033911
(43) Veröffentlichungstag der Anmeldung: 26.01.2011
(73) Patentinhaber: WESTFALIA - Automotive GmbH, 33378 Rheda-Wiedenbrück (DE)
(72) Erfinder: Hetfleisch, Raimund, 33129 Delbrück-Boke (DE)
(74) Vertreter: Bregenzer, Michael

(56) Entgegenhaltungen:
- EP-A1- 1 557 299
- DE-A1- 10 323 619
- DE-A1- 19 848 487
- US-A1- 2004 113 391

## Beschreibung

Die Erfindung betrifft eine Anhängekupplung mit einem Kupplungsarm zum Ankuppeln eines Anhängers und einem an einem Kraftfahrzeug, insbesondere einem Personenkraftfahrzeug, befestigbaren Halter zum Halten des Kupplungsarms, mit einer Verriegelungseinrichtung, die einen durch eine Federanordnung in eine Verriegelungsstellung federbelasteten Verriegelungskörper zum Verriegeln und ortsfesten Festlegen des Kupplungsarms an dem Halter aufweist, gemäß dem Oberbegriff des Anspruchs 1.

Eine Anhängekupplung dieser Art ist in DE 198 48 487 A1 erläutert.

Eine weitere Anhängekupplung dieser Art ist beispielsweise in der nicht vorveröffentlichten DE 10 2008 035 987 beschrieben. Die dort beschriebene Anhängekupplung ist mit einer Sperreinrichtung ausgestattet, die eine unabsichtliche Entriegelung der Verriegelungseinrichtung verhindert. Der Sperrkörper hintergreift den Verriegelungskörper derart, dass sich dieser nicht in Richtung seiner Entriegelungsstellung bewegen kann. Allerdings ist zur Belastung des Sperrkörpers in seine Sperrstellung eine zusätzliche Feder erforderlich.

Es ist daher die Aufgabe der vorliegenden Erfindung, auf einfache und zuverlässige Weise eine Bewegung des Verriegelungskörpers aus der Verriegelungsstellung in die Entriegelungsstellung zu verhindern.

Zur Lösung der Aufgabe ist eine Anhängekupplung gemäß der technischen Lehre des Anspruchs 1 vorgesehen.

Der erfindungsgemäße Ansatz ist es, dass die ohnehin vorhandene Federanordnung, die den Verriegelungskörper in seine Verriegelungsstellung belastet, zusätzlich auch das Sperr-Betätigungsglied in seine Sperrstellung belastet. Für die Sperreinrichtung, die das Sperr-Betätigungsglied und den mindestens einen Sperrkörper umfasst, ist also keine zusätzliche Feder oder Federanordnung erforderlich.

Die den Verriegelungskörper in seine Verriegelungsstellung belastende Federanordnung umfasst vorzugsweise nur eine einzige oder eine einteilige Feder.

Die den Verriegelungskörper in seine Verriegelungsstellung belastende Federanordnung stützt sich vorteilhaft direkt an dem Sperr-Betätigungsglied ab.

Die den Verriegelungskörper in seine Verriegelungsstellung belastende Federanordnung wirkt vorzugsweise ohne eine zwi-schen dem Sperr-Betätigungsglied und dem Verriegelungskörper angeordnete Federeinrichtung auf das Sperr-Betätigungsglied.

Das Sperr-Betätigungsglied hat zweckmäßigerweise eine Übertragungsfläche zur Übertragung einer Stellkraft der Federanordnung auf den Verriegelungskörper in Richtung seiner Verriegelungsstellung. Somit wirkt die Federanordnung über das Sperr-Betätigungsglied auf den Verriegelungskörper. Eine Kraftumlenkung ist nicht nötig.

Die Entriegelungsbetätigung ist vorzugsweise eine Zugbetätigung. Prinzipiell wäre es auch möglich, den Verriegelungskörper durch eine Druckbetätigung in seine Entriegelungsstellung zu verstellen. Bei beiden Betätigungsformen ist ein erfindungsgemäßer Gedanke, dass durch die jeweilige Entriegelungsbetätigung zunächst das Sperr-Betätigungsglied den Sperrkörper in seine Freigabestellung verstellt und dann das Betätigungsorgan eine Betätigungskraft, beispielsweise eine Zugkraft oder eine Druckkraft, zum Verstellen in die Entriegelungsstellung auf den Verriegelungskörper ausübt. Es ist somit eine sequentielle Bewegungsfolge realisiert, das heißt, zunächst Entsperren der Verriegelungseinrichtung und dann Entriegeln.

Vorzugsweise ist das Betätigungsorgan ein Zugorgan zur Ausübung einer Zugbetätigung beziehungsweise zur Ausübung einer Zugkraft auf den Verriegelungskörper. Prinzipiell möglich wäre aber auch ein Druckorgan, das eine Druckkraft bei einer Druckbetätigung auf den Verriegelungskörper beziehungsweise das Sperr-Betätigungsglied ausübt.

Ein weiterer Vorteil der Erfindung ist es, dass der mindestens eine Sperrkörper einen Bestandteil der Verriegelungseinrichtung bildet, so dass die Sperre beziehungsweise die Entsperrung vor Ort bei der Verriegelungseinrichtung stattfindet. Eine Kraftübertragung auf eine von der Verriegelungseinrichtung separate Sperre, beispielsweise mittels des Druck-Bowdenzugs bei einer Anhängekupplung gemäß EP 1 475 253 A1, ist nicht erforderlich. Dadurch ist die erfindungsgemäße Anhängekupplung beziehungsweise Verriegelungseinrichtung besonders einfach aufgebaut. Man kann lediglich beispielsweise ein Zugorgan verwenden, zum Beispiel einen Seilzug, der nicht auf Druck belastbar sein muss - dies jedoch prinzipiell sein kann. Ferner kann eine einfache Betätigungseinrichtung, beispielsweise Hand-Betätigungseinrichtung, verwendet werden, die keinerlei Sperrmittel aufweist, um die Verriegelungseinrichtung in ihrer Verriegelungsstellung zu sperren. Weiterhin ist die Sicherheit erhöht, da nur vor Ort in der Verriegelungseinrichtung Sperrorgane vorhanden sind und nicht die Gefahr einer äußeren Beschädigung, beispielsweise des vorgenannten Druck-Bowdenzugs oder sonstiger Betätigungsmittel, besteht und somit die Sicherheitsfunktion der gegen ein unbeabsichtigtes Entriegeln wirksamen Sperre, z.B. des mindestens einen Sperrkörpers, optimal ist.

Der mindestens eine Sperrkörper kann z.B. eine Art Sperrriegel sein. Bevorzugt ist es jedoch, beispielsweise eine Sperrkugel, mindestens einen Wälzkörper oder sonstige, beweglich gelagerte Sperr-Formschlusskörper oder dergleichen als den mindestens einen Sperrkörper zu verwenden. Es können auch mehrere miteinander verbundene oder aufeinander wirkende Sperrkörper vorgesehen sein, z.B. hintereinander aufgereihte Sperrkörper.

Der mindestens eine Sperrkörper ist vorzugsweise zwar durch das Sperr-Betätigungsglied betätigbar, jedoch nicht mit diesem verbunden oder bewegungsgekoppelt - wobei letztere beide Varianten ohne weiteres möglich sind. Es versteht sich, dass einer oder mehrere Sperrkörper auch beispielsweise gelenkig an dem Sperr-Betätigungsglied angeordnet sein können. Beispielsweise könnte das Sperr-Betätigungsglied einen Sperrkörper in der Art eines Armes aufweisen, der schwenk- und/oder schiebebeweglich an das Sperr-Betätigungsglied angelenkt ist.

Der Sperrkörper ist zweckmäßigerweise am Verriegelungskörper beweglich gelagert, beispielsweise linear und/oder drehbar. Beispielsweise hat der Verriegelungskörper eine Führung oder einen Führungskanal für einen jeweiligen Sperrkörper.

Bevorzugt ist es, wenn das Sperr-Betätigungsglied an dem Verriegelungskörper oder einem mit diesem wirkverbundenen Bauteil gelagert oder geführt ist.

Weiterhin ist das Sperr-Betätigungsglied in einer bevorzugten Ausführungsform in einem Führungskanal geführt, der zur Führung des Verriegelungskörpers dient.

Ferner ist in demselben Führungskanal vorteilhaft eine Feder der den Verriegelungskörper belastenden Federanordnung aufgenommen.

Diese Feder drückt beispielsweise über einen Bund oder Vorsprung oder Flansch auf den Sperr-Betätigungskörper, der seinerseits wiederum auf den Verriegelungskörper wirkt.

Beispielsweise dringt das Sperr-Betätigungsglied mit einem Kopf oder Führungsvorsprung in eine korrespondierende Aufnahme am Verriegelungskörper ein. Dabei ist es vorteilhaft, wenn ein außerhalb des Verriegelungskörpers befindlicher Teil des Sperr-Betätigungsglieds in einem Führungskanal geführt ist, der auch zur Führung des Verriegelungskörpers dient. Beispielsweise ist dieser im Führungskanal geführte Teil ein Bund oder ein Vorsprung, der gleichzeitig zur Stützung der Feder oder Federanordnung dient. In diesem Zusammenhang ist es als vorteilhaft anzusehen, wenn beispielsweise ein ringartiger Bund oder teilringartiger Bund des Sperr-Betätigungsglieds, auf den die Feder wirkt, zugleich als Führungsglied dient, das in dem Führungskanal geführt ist, der zu dem noch den Verdrängerkörper führt.

Die Anhängekupplung weist vorteilhaft eine Kopplungsanordnung zu einer Kopplung des Verriegelungskörpers und des Sperr-Betätigungsglieds mit dem Betätigungsorgan auf, so dass bei einer Entriegelungsbetätigung des Betätigungsorgans zuerst das Sperr-Betätigungsglied den mindestens einen Sperrkörper in seine Freigabestellung verstellt oder zu einer Verstellung in die Freigabestellung freigibt und danach das Betätigungsorgan den Verriegelungskörper in Richtung der Entriegelungsstellung verstellt. Somit ist das Sperr-Betätigungsglied mit dem Betätigungsorgan betätigbar

Die Kopplungsanordnung könnte prinzipiell das Betätigungsorgan, beispielsweise das Zugorgan oder Druckorgan, individuell mit dem Verriegelungskörper und dem Sperr-Betätigungsglied koppeln und dabei den vorgenannten zweistufigen Bewegungsablauf (zuerst Entsperren, dann Entriegeln) herstellen.

Vorzugsweise ist die Kopplungsanordnung jedoch in Betätigungsrichtung des Betätigungsorgans mit einem Freigang zwischen dem Verriegelungskörper und dem Sperr-Betätigungsglied angeordnet. Über den Freigang ist die zweistufige Betätigungsweise möglich, so dass das Betätigungsglied nämlich zuerst das Sperr-Betätigungsglied betätigt und sodann, nach Durchlaufen des Freigangs, auf den Verriegelungskörper wirkt.

An dieser Stelle sei bemerkt, dass es zwar vorteilhaft ist, wenn bei einer Entriegelungsbetätigung des Betätigungsorgans das Sperr-Betätigungsglied den mindestens einen Sperrkörper in seine Freigabestellung verstellt, bevor das Betätigungsorgan eine Betätigungskraft auf den Verriegelungskörper in Richtung der Entriegelungsstellung ausübt. Prinzipiell ist es aber möglich, dass das Betätigungsorgan eine Betätigungskraft - wenn auch vorteilhaft nur in geringem Umfang - auf den Verriegelungskörper in Richtung der Entriegelungsstellung bereits während des Entsperrens ausübt.

Die Kopplungsanordnung weist zweckmäßigerweise einen Zuganker mit einer Halteaufnahme auf, in der das Halteglied, insbesondere ein Querbolzen, mit Spiel bezüglich einer Zugrichtung der Betätigungsrichtung aufgenommen ist.

Die Kopplungsanordnung ist zweckmäßigerweise in einem Innenraum des Verriegelungskörpers und/oder in einem Innenraum des Sperr-Betätigungsglieds angeordnet. Dadurch ist der Platzbedarf niedrig. Insbesondere in unbetätigtem Zustand ist die Kopplungsanordnung in einem oder beiden der vorgenannten Innenräume geschützt untergebracht.

Der Verriegelungskörper und das Sperr-Betätigungsglied sind zweckmäßigerweise koaxial angeordnet, beispielsweise in einer Zugrichtung oder Druckrichtung des Betätigungsorgans.

Vorzugsweise ist auch die Federanordnung oder ein mit der Verriegelungseinrichtung verbundenes Ende des Betätigungsorgans koaxial mit dem Verriegelungskörper und/oder dem Sperr-Betätigungsglied. Bei der vorgenannten Reihenanordnung ist keine Kraftumlenkung zwischen den einzelnen Komponenten nötig.

Das Sperr-Betätigungsglied ist zweckmäßigerweise zwischen dem Verriegelungskörper und der Federanordnung angeordnet. Diese Konfiguration ist insbesondere bei einer Zugbetätigung vorteilhaft.

Prinzipiell ist es aber auch möglich, dass die Federanordnung nicht über das Sperr-Betätigungsglied auf den Verriegelungskörper wirkt, sondern direkt und zu dem auf das Sperr-Betätigungsglied. Beispielsweise könnte am Ende einer Feder ein Übertragungsglied angeordnet sein, das einerseits auf den Verriegelungskörper und andererseits auf das Sperr-Betätigungsglied wirkt.

Es ist vorteilhaft, wenn zwischen dem Sperr-Betätigungsglied und dem Verriegelungskörper eine Feder angeordnet ist, die das Sperr-Betätigungsglied vom Verriegelungskörper weg belastet.

Man könnte diese Federanordnung auch als eine Entsperr-Federanordnung bezeichnen, wenn sie nämlich dazu beiträgt, dass Sperr-Betätigungsglied unter Kraftwirkung des Verriegelungskörpers zu betätigen.

Das Sperr-Betätigungsglied weist zweckmäßigerweise eine Schrägfläche zum Betätigen des mindestens einen Sperrkörpers in die Sperrstellung auf. Mithin ist also eine Art Keilgetriebe vorhanden.

Prinzipiell ist es möglich, die Verriegelungseinrichtung im Kupplungsarm anzuordnen, was beispielsweise bei einem an den Halter ansteckbar Kupplungsarm vorteilhaft ist.

Eine bevorzugte Ausführungsform sieht vor, dass die Verriegelungseinrichtung einschließlich des mindestens einen Sperrkörpers am Halter angeordnet ist.

Die Erfindung ist ohne weiteres bei Steck-Anhängekupplungen realisierbar, bei denen der Kupplungsarm an den Halter ansteckbar, beispielsweise in eine Halterhülse einsteckbar, ist.

Bevorzugt ist die Verwendung der Erfindung jedoch bei dreh- und/oder schiebebeweglich am Halter gelagerten Kupplungsarmen. Der Kupplungsarm ist unverlierbar, das heißt nicht vom Halter entfernbar, jedoch am Halter verstellbar, beispielsweise zwischen einer zum Anhängen des Anhängers vorgesehenen, vorteilhaft nach hinten vor einen Stoßfänger des Kraftfahrzeugs vorstehenden Arbeitsstellung und einer für den Nichtgebrauch vorgesehenen Ruhestellung, bei der der Kupplungsarm zweckmäßigerweise in einer im Wesentlichen verborgenen Stellung unterhalb des Kraftfahrzeugs, in einem Zwischenraum zwischen Stoßfänger und Karosserie oder dergleichen, untergebracht ist.

Die Verriegelungseinrichtung ist zweckmäßigerweise vollständig, zumindest aber teilweise geschützt in einem Innenraum, beispielsweise des Halters, des Kupplungsarms oder einem Innenraum einer den Kupplungsarm am Halter beweglich lagernden Lageranordnung angeordnet. Somit ist die Verriegelungseinrichtung, vorzugsweise einschließlich der erfindungsgemäßen Verriegelungssperre, vor Umwelteinflüssen geschützt. Die Lageranordnung umfasst beispielsweise eine Hohlwelle, in deren Innenraum zumindest Teile der Verriegelungseinrichtung angeordnet sind.

Prinzipiell wäre es möglich, dass der Verriegelungskörper den Kupplungsarm unmittelbar am Halter verriegelt, z.B. verkeilt. Eine bevorzugte Ausführungsform sieht jedoch vor, dass die Verriegelungseinrichtung mindestens ein beweglich gelagertes Verriegelungselement aufweist, das durch den Verriegelungskörper, der insbesondere ein Verdrängerkörper ist, in eine Verriegelungsstellung zur Verriegelung des Kupplungsarms am Halter verstellbar ist. Der Verriegelungskörper verdrängt sozusagen das Verriegelungselement. Somit wirkt der Verriegelungskörper nicht unmittelbar verriegelnd, sondern über mindestens ein dazwischengeschaltetes Verriegelungselement. Bevorzugt ist beispielsweise eine Mehrkugelanordnung, insbesondere eine Dreikugelanordnung, mit Kugeln als Verriegelungselementen.

Zum Verriegeln und Fixieren des Kupplungsarms am Halter sind zweckmäßigerweise Formschlusskonturen sowohl am Halter als auch an einem an dem Halter beweglich gelagerten Arm-Lagerteil des Kupplungsarms angeordnet. Das Arm-Lagerteil kann den Kupplungsarm halten oder ein integrales Bauteil des Kupplungsarms sein, das heißt ein Bestandteil des Kupplungsarms. Die Verriegelungseinrichtung ist zweckmäßigerweise zum Verstellen der Formschlusskonturen zueinander ausgestaltet, derart, dass sie die Formschlusskonturen in der Verriegelungsstellung formschlüssig ineinandergreifend verstellt. In der Entriegelungsstellung sind die Formschlusskonturen voneinander entfernt und lassen so eine Bewegung des Kupplungsarms zu. Beispielsweise verstellt die Verriegelungseinrichtung das Arm-Lagerteil in Richtung des Halters oder umgekehrt. Vorzugsweise verstellt die Verriegelungseinrichtung das Arm-Lagerteil und den Halter relativ zueinander radial und/oder axial, das heißt in einer Linearbewegung oder einer Drehbewegung. Eine Kombination beider Bewegungsarten (radiales und/oder axiales Verstellen) ist ebenfalls denkbar.

Der Kupplungsarm ist an dem Halter zweckmäßigerweise über eine Hohlwellen-Lageranordnung beweglich gelagert. Bei dieser Lagerart ist ein Lagerteil auf einer Hohlwelle beweglich, beispielsweise schiebebeweglich und/oder drehbeweglich gelagert. Der Verriegelungskörper ist in einem Innenraum der Hohlwelle beweglich aufgenommen, beispielsweise schiebebeweglich und/oder drehbeweglich. Das mindestens eine Verriegelungselement, beispielsweise ein Wälzkörper, eine Kugel oder dergleichen, ist in einem Führungskanal an der Hohlwelle beweglich gelagert, wobei sich der Führungskanal zwischen dem Innenraum und einer äußeren Lagerfläche der Hohlwelle erstreckt. Somit ist das Verriegelungselement durch den Verriegelungskörper vom Innenraum her nach außen vor die Lagerfläche verdrängbar, so dass das Verriegelungselement zumindest teilweise vor die Lagerfläche vorsteht und gegen das Lagerteil wirkt. Das Lagerteil ist zweckmäßigerweise ein Arm-Lagerteil des Kupplungsarms oder ein Arm-Lagerteil, das den Kupplungsarm trägt.

Das mindestens eine teilweise vor die Lagerfläche vorstehende Verriegelungselement kann in einer im Ausführungsbeispiel nicht dargestellten Variante das Lagerteil unmittelbar am Halter verriegeln, so dass das Lagerteil unbeweglich ortsfest, insbesondere dreh- und schiebefest, bezüglich des Halters, z.B. der Hohlwelle, festgelegt ist.

Vorzugsweise ist die Anordnung jedoch so getroffen, dass das Verriegelungselement beim Verdrängen vor die Lagerfläche das Lagerteil an der Hohlwelle verstellt, insbesondere linear verstellt, so dass mindestens eine mit dem Lagerteil fest verbundene Formschlusskontur in eine mit der Hohlwelle fest verbundene Formschlusskontur formschlüssig verriegelnd eingreift. Zur Herstellung dieses Formschlusses wäre auch eine Drehbetätigung oder eine kombinierte Linearbetätigung und Drehbetätigung möglich. Somit wirkt also der Verriegelungskörper zunächst auf die Verriegelungselemente, die wiederum ihrerseits das Lagerteil verstellen, um Formschlusskonturen in Eingriff zu bringen.

Ferner können auch zweckmäßigerweise eines oder mehrere Entriegelungselemente vorgesehen sein, die vom Verriegelungskörper oder einem sonstigen Organ der Verriegelungseinrichtung betätigt werden, um die Formschlusskonturen in die voneinander entfernte Freigabestellung zu betätigen. Eine solche Ausführungsform, ähnlich wie bei der Anhängekupplung gemäß EP 1 475 253 A1, ist bei der erfindungsgemäßen Anhängekupplung vorteilhaft vorgesehen.

Die Hohlwelle ist zweckmäßigerweise mit dem Halter verbunden oder mit diesem einstückig. Das Lagerteil ist bei dieser Konfiguration mit dem Kupplungsarm verbunden oder mit diesem einstückig.

Das Betätigungsorgan ist zweckmäßigerweise flexibel, insbesondere biegeflexibel. Dadurch ist eine freie Anordnung des Betätigungsorgans möglich, das beispielsweise vom Halter weg in einen Innenraum, insbesondere in ein Gepäckabteil des Kraftfahrzeuges, verläuft, wo eine manuelle und/oder motorische Betätigungseinrichtung zur Betätigung des Betätigungsorgans vorhanden ist.

Für das Betätigungsorgan sind zweckmäßigerweise eine Handbetätigungseinrichtung zur manuellen Betätigung und/oder auch eine motorische Löseanordnung beziehungsweise ein motorischer Löseantrieb vorgesehen. Für einen Notbetrieb, z.B. bei einer Motorstörung, ist es vorteilhaft, wenn neben einem motorischen Löseantrieb auch eine Handbetätigungseinrichtung, zumindest eine Handhilfsbetätigungseinrichtung vorgesehen ist.

Die motorische Betätigungseinrichtung ist zweckmäßigerweise im Außenbereich des Kraftfahrzeugs, vorzugsweise am Halter, angeordnet. Es ist aber auch möglich, dass ein Antrieb der motorischen Betätigungseinrichtung in einem Innenraum des Kraftfahrzeugs anzuordnen und mindestens ein Übertragungsglied, z.B. ein Seilzug, eine Stange oder dergleichen, zwischen der Verriegelungseinrichtung und einem Antrieb der motorischen Betätigungseinrichtung vorzusehen.

Der Verriegelungskörper und/oder das Sperr-Betätigungsglied und/oder der mindestens eine Sperrkörper sind zweckmäßigerweise linear beweglich gelagert. Vorzugsweise sind der Verriegelungskörper und das Sperr-Betätigungsglied im Wesentlichen parallel zueinander beweglich gelagert. Es versteht sich, dass auch eine rotatorische Sperr- oder Entsperrbetätigung bzw. Verriegelung oder Entriegelung möglich sind.

Nachfolgend wird ein Ausführungsbeispiel der Erfindung anhand der Zeichnung erläutert. Es zeigen:
- Figur 1: eine perspektivische Schrägansicht einer erfin- dungsgemäßen Anhängekupplung,
- Figur 2: die Anhängekupplung gemäß Figur 1, jedoch bei ent- ferntem Kupplungsarm,
- Figur 3: eine Querschnittsansicht der Anhängekupplung ent- lang einer Schnittlinie A-A in Figur 1 in Verriege- lungsstellung und Sperrstellung,

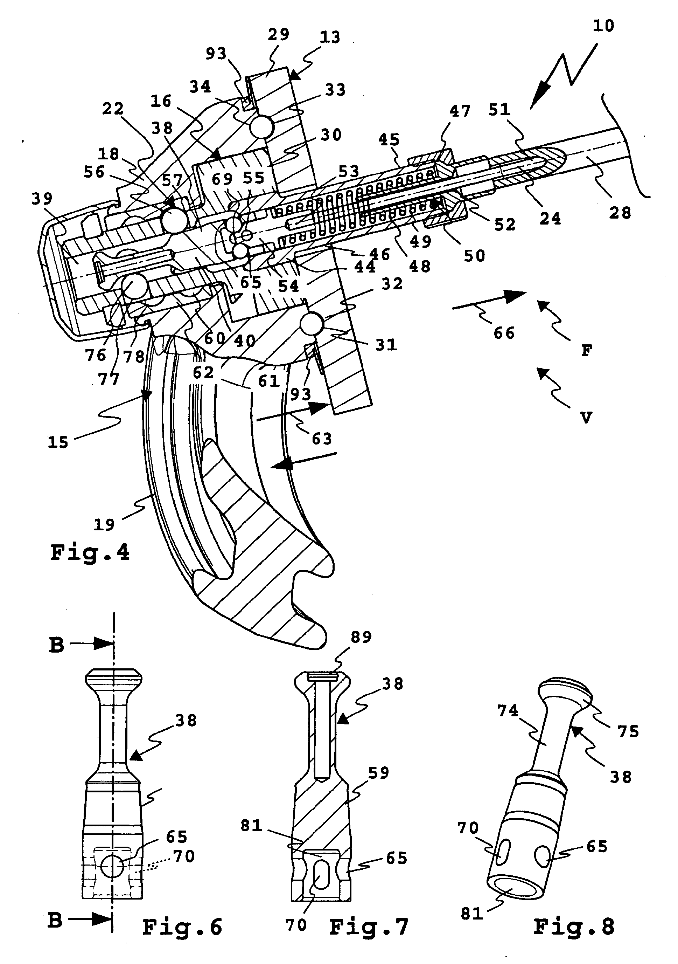

- Figur 4: die Ansicht etwa entsprechend Figur 3 bei noch ver- riegelter, bereits entsperrter Verriegelungsein- richtung,
- Figur 5: die Anhängekupplung gemäß Figuren 3, 4 entsperrt und entriegelt,
- Figur 6: eine Seitenansicht eines Verriegelungskörpers der Anhängekupplung gemäß der vorstehenden Figuren,
- Figur 7: eine Querschnittsansicht des Verriegelungskörpers gemäß Figur 6 etwa entlang einer Schnittlinie B-B in Figur 6,
- Figur 8: den Verriegelungskörper gemäß Figuren 6, 7 in einer perspektivischen Schrägansicht,
- Figur 9: ein Sperr-Betätigungsglied der Anhängekupplung ge- mäß der vorstehenden Figuren in Seitenansicht,
- Figur 10: eine Querschnittsansicht des Sperr- Betätigungsglieds gemäß Figur 9 etwa entlang einer Schnittlinie C-C in Figur 9,
- Figur 11: eine perspektivische Schrägansicht und
- Figur 12: eine Draufsicht des Sperr-Betätigungsglieds gemäß Figuren 9, 10.

Eine Anhängekupplung 10 zum Ankuppeln eines Anhängers 11 an ein Kraftfahrzeug 12 umfasst einen Halter 13, der an einem schematisch dargestellten Querträger 14 des Kraftfahrzeugs 12 befestigbar, beispielsweise anschraubbar, anschweißbar oder dergleichen ist. Der Halter 13 hält einen Kupplungsarm 15.

Der Kupplungsarm 15 ist mittels eines Schwenk-Schiebelagers 16 einer Lageranordnung 17 schwenkbeweglich und schiebebeweglich an dem Halter 13 gelagert.

Ein Halsabschnitt 19 des Kupplungsarms 15 steht von einem am Halter 13 beweglich gelagerten Arm-Lagerteil 18 ab und trägt an seinem freien, vom Halter 13 entfernten Ende einen Kugelkopf 20 zum Ankuppeln des Anhängers 11.

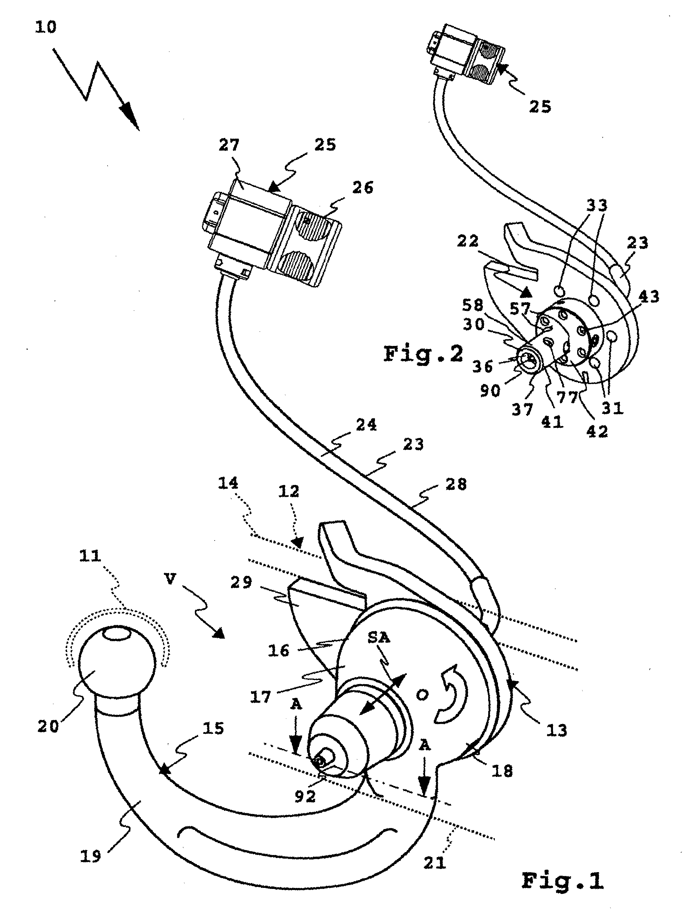

Mit Hilfe der Lageranordnung 17 ist der Kupplungsarm 15 zwischen seiner in Figur 1 dargestellten Arbeitsstellung, bei der er vor einen Stoßfänger 21 des Kraftfahrzeugs 12 nach hinten vorsteht, und einer verdeckten, beispielsweise hinter dem Stoßfänger 21 und/oder unterhalb der Karosserie des Kraftfahrzeugs 12 verborgenen Nichtgebrauchsstellung oder Ruhestellung verschwenkbar.

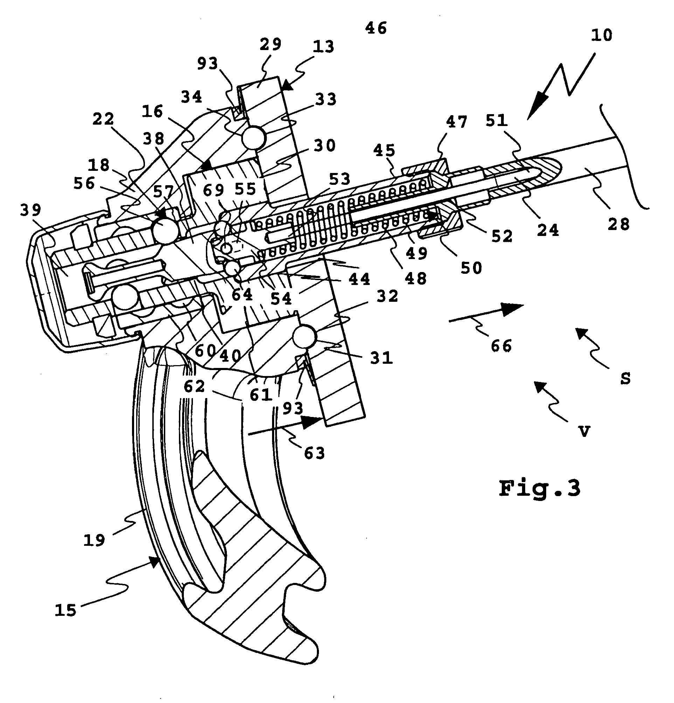

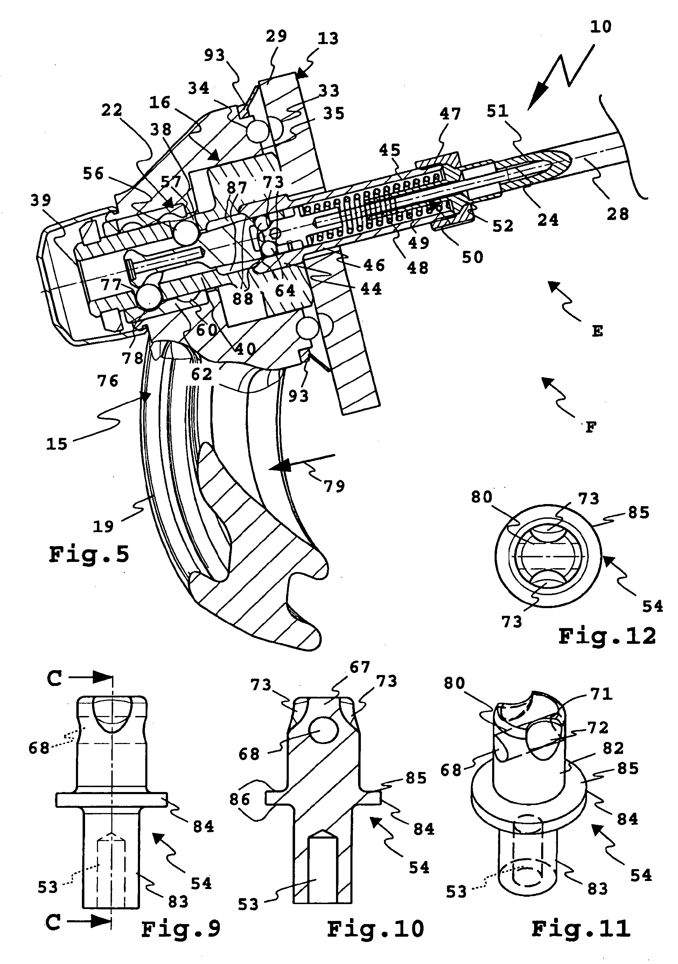

Zumindest in der Arbeitsstellung, vorzugsweise auch in der Nichtgebrauchsstellung, ist der Kupplungsarm 15 mittels des Arm-Lagerteils 18 mit einer Verriegelungseinrichtung 22 verriegelbar. Die Verriegelungseinrichtung 22 ist durch ein Betätigungsorgan 23 aus ihrer Verriegelungsstellung V (Figuren 1, 3) in eine Entriegelungsstellung E (Figur 5) verstellbar, in der das Arm-Lagerteil 18 bezüglich des Halters 13 bewegbar ist.

Die Verriegelungseinrichtung 22 kann mit dem Betätigungsorgan 23, das ein Zugorgan 24 umfasst, von der Verriegelungsstellung V in die Entriegelungsstellung E verstellt werden. Das Betätigungsorgan 23 erstreckt sich zwischen der Verriegelungseinrichtung 22 am Halter 13 und einer Handbetätigungseinrichtung 25 zur manuellen Betätigung des Betätigungsorgans 23. Das Zugorgan 24 umfasst einen Bowdenzug 28. Der Bowdenzug 28 kann beispielsweise vom Außenbereich des Kraftfahrzeugs 12 in einen Innenraum, beispielsweise ein Gepäckabteil, verlaufen, wo die Handbetätigungseinrichtung 25 vorteilhaft angeordnet ist.

Eine Handbetätigungseinrichtung kann z.B. auch einen Bedienhebel oder eine Hebelanordnung umfassen. Der Bedienhebel kann im Außenbereich des Kraftfahrzeugs oder auch in dessen Innenraum vorgesehen sein.

Die Handbetätigungseinrichtung 25 umfasst ein Handrad 26, das an einem Gehäuse 27 drehbar ist, um das Zugorgan 24 zu ziehen. Prinzipiell wäre anstelle des Bowdenzugs 28 auch ein einfacher Seilzug, eine Zugstange oder dergleichen ohne weiteres möglich. Der Bowdenzug 28 erlaubt jedoch eine relativ freie Verlegung an dem Kraftfahrzeug 12.

Eine am Querträger 14 befestigte Trägerplatte 29 des Halters 13 trägt einen Lagerkopf 30, auf dem das Arm-Lagerteil 18 schiebebeweglich und schwenkbeweglich gelagert ist. Durch eine Verschiebebewegung entlang einer Schiebeachse SA ist das Arm-Lagerteil 18 auf dem Lagerkopf 30 von der Trägerplatte 29 weg oder zu dieser hin verschieblich. Wenn das Arm-Lagerteil 18 von der Trägerplatte 29 weg verschoben ist, sind Formschlusskonturen 31 am Halter 13 und Formschlusskonturen 32 am Arm-Lagerteil 18 außer Eingriff, so dass das Arm-Lagerteil 18 schwenkbeweglich bezüglich des Halters 13 ist.

Wenn das Arm-Lagerteil 18 hingegen entlang der Schiebeachse SA zum Halter 13 beziehungsweise zur Trägerplatte 29 hin verschoben ist, greifen die Formschlusskonturen 31, 32 formschlüssig ineinander und verriegeln so das Arm-Lagerteil 18 am Halter 13 zumindest drehbeweglich. Die Formschlusskonturen 31 umfassen ringförmig um den Lagerkopf 30 herum angeordnete Kalotten 33, in die Kugeln 34 eingreifen, die ihrerseits an einer dem Halter 13 zugewandten Stirnseite 35 des Arm-Lagerteils 18 angeordnet sind.

Es versteht sich, dass anstelle von Kugeln und Kalotten beispielsweise auch bolzenartige Vorsprünge, die in korrespondierende Sacklöcher eingreifen, möglich sind. Ferner könnte auch mindestens ein männliches Formschlussteil ohne weiteres auch am Halter, mindestens ein weibliches Formschlussteil am Arm-Lagerteil angeordnet sein.

Die Verriegelungseinrichtung 22 ist geschützt in einem Innenraum 36 einer Hohlwelle 37 des Lagerkopfs 30 angeordnet. In dem Innenraum 36 ist ein Verriegelungskörper 38 in einem Linearführungskanal 39 linear verschieblich gelagert. Der Verriegelungskörper 38 umfasst vorliegend einen Verdrängerkörper 40 zum Verdrängen von Verriegelungselementen 56. Der Verriegelungskörper 38 ist im Wesentlichen in einem vorderen, freien Abschnitt 41 des Lagerkopfs 30 beziehungsweise der Hohlwelle 37 mit einem kleineren Durchmesser angeordnet. Der Abschnitt 41 steht vor einen Basisabschnitt 42 des Lagerkopfs 30 vor, der einen im Vergleich zum Abschnitt 41 größeren Durchmesser hat und eine Befestigungsbasis zur Befestigung an der Trägerplatte 29 bildet. Am Basisabschnitt 42 sind Schraublöcher 43 angeordnet, die sich in der Schieberichtung SA erstrecken und für Schrauben zum Anschrauben an die Trägerplatte 29 vorgesehen sind. Es versteht sich, dass der Lagerkopf 30 auch von der Trägerplatte 29 her schraubbar oder in sonstiger Weise mit dieser verbunden oder gar mit ihr einstückig sein kann.

Der Basisabschnitt 42 des Lagerkopfs 30 hat eine Aufnahme 44 für eine zum Anschluss des Betätigungsorgans 23 vorgesehenes Anschlusseinrichtung 45, die einen Durchbruch 46 an der Trägerplatte 29 durchdringt und nach hinten vor die Trägerplatte 29 vorsteht. Die Anschlusseinrichtung 45 hat eine teilweise als Führungskanal ausgestaltete Federkammer 48, die sich an die Abschnitte 41, 42 anschließt und somit zu dem Innenraum 36 gehört, in dem die Verriegelungseinrichtung 22 angeordnet ist.

Der Innenraum 36 ist jeweils endseitig verschlossen, einerseits eine Kappe 92, die auf den vom Halter 13 entfernten Endbereich des Arm-Lagerteils 18 aufgesetzt ist, und andererseits durch einen Deckel 47 am freien Ende der Anschlusseinrichtung 45. Dadurch ist die Verriegelungseinrichtung 22 vor Umwelteinflüssen optimal geschützt

Weiterhin trägt zu ihrem mechanischen Schutz bei, dass das Arm-Lagerteil 18 sozusagen auf den Lagerkopf 30 aufgesetzt ist und diesen mantelt. Ferner ist eine Dichtung 93 zwischen der Trägerplatte 29 und dem Arm-Lagerteil 18 angeordnet. Die Dichtung 93 ist eine Ringdichtung, die am Arm-Lagerteil 18 angeordnet ist und die Formschlusskonturen 31, 32 umgibt und vor Umwelteinflüssen schützt.

Das Arm-Lagerteil 18 hat eine im Wesentlichen stumpfkegelige Form.

Der Deckel 47 hat einen Durchbruch für ein Zugseil 51, das im Innern des Betätigungsorgans 23 verläuft. Das Zugseil 51 ist durch ein Anschlussstück 52 am Deckel 47 hindurchgeführt. Das Anschlussstück 52 dient zum Anschluss des Bowdenzugs 28 an den Halter 13 beziehungsweise die Verriegelungseinrichtung 22.

In der Federkammer 48 ist eine Feder 49 einer Federanordnung 50 angeordnet, die sich an dem Anschlussstück 52 abstützt.

Das Zugseil 51 ist durch einen Innenraum der als Schraubenfeder ausgestalteten Feder 49 geführt und an einer Halterung 53 eines Sperr-Betätigungsglieds 54 festgelegt, beispielsweise eingeschraubt, verklemmt, verklebt oder dergleichen.

Das Sperr-Betätigungsglied 54 ist mittels einer Kopplungsanordnung 55 in Zugrichtung des Zugseils 51 mit dem Verriegelungskörper 38 zuggekoppelt. Ferner stützt sich die als Druckfeder ausgestaltete Feder 49 an ihrem dem Deckel 47 entgegengesetzten Ende hinten am Sperr-Betätigungsglied 54 ab und drückt dieses in Richtung des Verriegelungskörpers 38. Mithin betätigt also die Federanordnung 50 den Verdrängerkörper 40 über das zwischengeschaltete Sperr-Betätigungsglied 54 in seine Verriegelungsstellung V.

In der Verriegelungsstellung V verdrängt der Verriegelungskörper 38 in seiner Eigenschaft als Verdrängerkörper 40 die Verriegelungselemente 56. Die Verriegelungselemente 56 sind in Führungskanälen 57 beweglich gelagert, die sich zwischen einer Außenfläche 58 der Hohlwelle 37 und dem Innenraum 36 erstrecken. Die Verriegelungselemente 56 sind vorliegend Kugeln, wobei auch andere Formschlusselemente, beispielsweise Bolzen, Rollen oder dergleichen ohne weiteres möglich sind. Der Verdrängerkörper 40 verdrängt in der Verriegelungsstellung V mit einer Verdrängerfläche 59 die Verriegelungselemente 56 nach radial außen durch die Führungskanäle 57 hindurch, so dass sie vor die Außenfläche 58 vorstehen. Dort greifen die Verriegelungselemente 56 in eine Verriegelungsaufnahme 60 im Innenraum des Arm-Lagerteils 18 ein. Die Verriegelungsaufnahme 60 ist mit einer derartigen Kontur ausgestaltet, dass die nach radial außen verdrängten Verriegelungselemente 56 eine Andrückkraft 63 in Richtung des Halters 13 auf das Arm-Lagerteil 18 ausüben.

Die Verriegelungsaufnahme 60 ist ringförmig, z.B. als eine Kugelsitzrinne ausgestaltet, so dass es auf die jeweilige Drehposition des Arm-Lagerteils 18 bezüglich des Halters 13 insoweit nicht ankommt. Beispielsweise ist die Verriegelungsaufnahme 60 an einem Ringeinsatz 62 angeordnet, der in einer Lageraufnahme 61 des Arm-Lagerteils 18 festgelegt ist.

Korrespondierend mit den unterschiedlichen Durchmessern des Abschnitts 41 und des Basisabschnitts 42 des Lagerkopfs 30 ist die Lageraufnahme 61 stufig.

Zwar hat die Verdrängerfläche 59 eine selbstsperrende Schrägneigung von beispielsweise etwa 2 bis 5°, damit eine Rückwirkung der Verriegelungselemente 56 in Richtung der Entriegelungsstellung E den Verdrängerkörper 40 bzw. Verriegelungskörper 38 an sich nicht in die Entriegelungsstellung E verdrängen kann. Durch die Federkraft der Feder 49, die über die Verdrängerfläche 59, die Verriegelungselemente 56 (Kugeln) in die Lageraufnahmen 61 in die Andrückkraft 63 umgelenkt wird, bleibt an sich das Arm-Lagerteil 18 sicher am Halter 13 verriegelt.

Eine erfindungsgemäße Sperre schafft eine zusätzliche Sicherheit:
Mehrere Sperrkörper 64, beispielsweise zwei oder drei, vorzugsweise Kugeln, Wälzkörper oder sonstige, beweglich gelagerte Sperr-Formschlusskörper, sperren den Verriegelungskörper 38 in der Verriegelungsstellung V gegen einer Entriegelungsbewegung in Richtung der Entriegelungsstellung E. Die Sperrkörper 64 sind in Sperrkörperführungen 65 des Verriegelungskörpers 38 schiebebeweglich gelagert. Die Sperrkörperführungen 65 verlaufen quer, vorliegend senkrecht quer, zu dem Linearführungskanal 39 zur linearen Führung des Verriegelungskörpers 38.

Damit die Entsperrbetätigung des Sperrkörpers 64 der Entriegelungsbewegung des Verriegelungskörpers 38 vorausgeht, ist die Kopplungsanordnung 55 vorgesehen. Die Kopplungsanordnung 55 koppelt den Verriegelungskörper 38 mit einem Freigang, z.B. mit einem Längsspiel, entlang einer Zugrichtung 66 (insbesondere parallel zur Schiebeachse SA) mit dem Sperr-Betätigungsglied 54, das mit dem Zugorgan 24 verbunden ist.

Das Sperr-Betätigungsglied 54 enthält einen Zugabschnitt 67 mit einer Halteaufnahme 68, die von einem Halteglied 69 durchdrungen ist. Das Halteglied 69 ist fest mit dem Verriegelungskörper 38 verbunden. Das Halteglied 69 umfasst beispielsweise einen Querbolzen, der die Halteaufnahme 68 durchdringt und in Aufnahmen 70 des Verriegelungskörpers 38 aufgenommen ist. Das Halteglied 69 hat innerhalb der Aufnahmen 70, die als Langlöcher ausgestaltet sind, bezüglich der Zugrichtung 66 ein Freigang-Spiel. Der Zugabschnitt 67 und das Halteglied 69 bilden eine Art Zuganker 71

Eine Entriegelung der Verriegelungseinrichtung 22 verläuft nun folgendermaßen:
Zunächst wirkt das Zugorgan 24 nur auf das Sperr-Betätigungsglied 54 und verlagert dieses in Zugrichtung 66, wodurch der Sperrkörper 64 von seiner Sperrstellung S in die Freigabestellung F verstellt wird. Das Halteglied 69 gleitet dabei entlang der Zugrichtung 66 in der Halteaufnahme 68. Der Verriegelungskörper 38 bleibt noch in der Verriegelungsstellung V. Die beiden Komponenten 54 und 38 sind bei diesem ersten Betätigungsabschnitt durch das Spiel der Kopplungsanordnung 55 zugentkoppelt.

Wenn das Halteglied 69 in den Aufnahmen 70 einen für das Entsperren des Sperrkörpers 64 erforderlichen Betätigungsweg durchlaufen hat, schlägt es an dem Verriegelungskörper 38 zugewandten Enden der Aufnahmen 70 an. Das Sperr-Betätigungsglied 54 ist dann so positioniert, dass die Sperrkörper 64 an Schrägflächen 72 entlang in Vertiefungen 73 am Sperr-Betätigungsglied 54 gleiten können, d.h. in ihre Freigabestellung F fallen. Somit ist der Weg des Verriegelungskörpers 38 in die Entriegelungsstellung E frei. Das Sperr-Betätigungsglied 54 nimmt bei einer weiteren Betätigung des Zugorgans 24 den Verriegelungskörper 38 in die Entriegelungsstellung E mit.

Bei dieser Entriegelung wird zunächst die Verdrängerfläche 59 unterhalb der Verriegelungselemente 56 wegbewegt, so dass ein Freiraumabschnitt 74 des Verriegelungskörpers 38 unterhalb der Verriegelungselemente 56 positioniert ist. Der Freiraumabschnitt 74 gibt einen Bewegungsfreiraum für die Verriegelungselemente 56 frei, so dass diese nach radial innen durch die Führungskanäle 57 hindurch in Richtung des Innenraums 36 beweglich sind, um aus den Verriegelungsaufnahmen 60 herauszugelangen und somit die Verriegelung des Kupplungsarms 15 am Halter 13 aufzuheben. Die Andrückkraft 63 ist dann gleich Null, so dass die Formschlusskonturen 31, 32 außer Eingriff gelangen können.

Das Arm-Lagerteil 18 könnte aber prinzipiell am Halter 13 festbacken, beispielsweise nach langem Fahrbetrieb. Auch für diese Situation sind bei der Anhängekupplung 10 Maßnahmen getroffen. An den Freiraumabschnitt 74 des Verdrängerkörpers 40 schließen sich Schrägflächen 75 zum Betätigen von mindestens einem, vorzugsweise zwei oder drei Entriegelungskörpern 76 an, die in Führungskanälen 77 ähnlich den Führungskanälen 57 beweglich gelagert sind. Die Schrägflächen 75 drücken die Entriegelungskörper 76, vorzugsweise Kugeln, nach radial außen durch die Führungskanäle 77 hindurch in Entriegelungsaufnahmen 78 am Ringeinsatz 62 und erzeugen dadurch eine Ablösekraft 79 zum Ablösen des Arm-Lagerteils 18 vom Halter 13. Die Ablösekraft 79 und die Andrückkraft 63 sind einander entgegengesetzt.

Die Feder 49 drückt in Richtung der Verriegelungsstellung V auf das Sperr-Betätigungsglied 54 und dieses wiederum auf den Verriegelungskörper 38.

Ein Kopfbereich 80 des Sperr-Betätigungsglieds 54 ist in einem als Führungskanal oder Führungsaufnahme ausgestalteten Innenraum 81 des Verriegelungskörpers 38 aufgenommen und dort beweglich gelagert. Der Innenraum 81 ist im Wesentlichen hohlzylindrisch, wobei dessen Innenflächen zumindest teilweise Führungsflächen für einen ebenfalls zylindrischen Führungsabschnitt 82 des Kopfbereichs 80 aufweist. Die Vertiefungen 73 erstrecken sich von einer freien Stirnseite des Kopfbereichs 80 zum Führungsabschnitt 82 hin. Die Vertiefungen 73 sind beispielsweise wannenartig oder kuhlenartig ausgestaltet.

Zwischen dem Kopfbereich 80 und einem die Halterung 53 für das Betätigungsorgan 23 aufweisenden Halteabschnitt 83 befindet sich ein Übertragungs- und Führungsabschnitt 84 des Sperr-Betätigungsglieds 54. Der Übertragungs- und Führungsabschnitt 84 umfasst einen vorliegend flanschartigen, jedenfalls teilringförmigen oder ringförmigen Vorsprung 85. Der Übertragungs-/Führungsabschnitt 84 ist stets außerhalb des Innenraums 81 und hat zum einen eine Führungsfunktion der Gestalt, dass er an der Innenwand der Federkammer 48 geführt ist, die insoweit einen Führungskanal bereitstellt, und zum anderen Druckkräfte der Feder 49 auf den Verriegelungskörper 38 überträgt. Somit bilden also einander entgegengesetzte, dem Kopfbereich 80 und dem Halteabschnitt 83 zugewandte Ober- und Unterseiten des Übertragungs- und Führungsabschnitts 84 Übertragungsflächen 86 zur Übertragung der Kräfte der Federanordnung 50 auf den Verriegelungskörper. Der Vorsprung 85 bildet sozusagen einen Stützvorsprung, an dem die Feder 49 anschlägt und der andererseits an einer dem Sperr-Betätigungsglied 54 zugewandten Stirnseite des Verriegelungskörpers 38 anschlägt. Der Halteabschnitt 83 steht in einen Innenraum der Feder 49 vor, d.h. er hat einen geringeren Durchmesser als der Vorsprung 85.

Das Sperr-Betätigungsglied 54 betätigt, zweckmäßigerweise mit den Schrägflächen 72, die beiden Sperrkörper 64 nach radial außen durch die Sperrkörperführungen 65 des Verriegelungskörpers 38 hindurch, so dass sie in der Sperrstellung S in Sperr-Ausnehmungen 87 am Halter 13 eindringen. Die Sperr-Ausnehmungen 87 sind beispielsweise Erweiterungen des Linearführungskanals 39. Allerdings stehen die Sperrkörper 64 nur soweit in die Sperr-Ausnehmungen 87 vor eine Außenfläche des Verriegelungskörpers 38 vor, dass sie noch zumindest teilweise in den Sperrkörperführungen 65 sind. In der Sperrstellung S stützt sich somit der Verriegelungskörper 38 an den Sperrkörpern 64 ab, die sich ihrerseits an Anschlagflächen 88 der Sperr-Ausnehmungen 87 abstützen. Die Sperr-Ausnehmungen 87 sind beispielsweise in der Art von Taschen ausgestaltet. Die Anschlagflächen 88 weisen vorzugsweise mit den Konturen der Sperrkörper 64 korrelierende Innenkonturen auf. Sie sind beim Ausführungsbeispiel z.B. ausgerundet.

Zwar könnte man z.B. im wesentlichen kalottenförmige Sperr-Ausnehmungen bei einer erfindungsgemäßen Anhängekupplung vorsehen. Vorteilhaft weisen erfindungsgemäße Sperr-Ausnehmungen jedoch eine Länge auf, die ein Nachstellen des Verriegelungskörpers in Richtung seiner Verriegelungsstellung ermöglicht. So haben z.B. die Sperr-Ausnehmungen 87 vorteilhaft eine Längserstreckung entlang der Schiebeachse SA.

Am freien Ende oder Kopf des Verriegelungskörpers 38 ist zweckmäßigerweise eine Aufnahme 89 für einen Sensor 90 vorhanden, mit dem eine jeweilige Verriegelungsstellung V oder Entriegelungsstellung B des Verriegelungskörpers 38 ermittelbar ist.

## Patentansprüche

1. Anhängekupplung mit einem Kupplungsarm (15) zum Ankuppeln eines Anhängers (11) und einem an einem Kraftfahrzeug (12), insbesondere einem Personenkraftfahrzeug, befestigbaren Halter (13) zum Halten des Kupplungsarms (15), mit einer Verriegelungseinrichtung (22), die einen durch eine Federanordnung (50) in eine Verriegelungsstellung (V) federbelasteten Verriegelungskörper (38) zum Verriegeln und ortsfesten Festlegen des Kupplungsarms (15) an dem Halter (13) aufweist, wobei der Verriegelungskörper (38) durch eine Entriegelungsbetätigung mit einem Betätigungsorgan (23) aus der Verriegelungsstellung (V) in eine Entriegelungsstellung (E) verstellbar ist, in der der Kupplungsarm (15) bezüglich des Halters (13) beweglich ist, und wobei die Verriegelungseinrichtung (22) mindestens einen zwischen einer Freigabestellung (F) und einer Sperrstellung (S) verstellbaren, durch ein Sperr-Betätigungsglied (54) betätigbaren Sperrkörper (64) zum Versperren einer Bewegung des Verriegelungskörpers (38) aus der Verriegelungsstellung (V) in die Entriegelungsstellung (E) aufweist, **dadurch gekennzeichnet, dass** die den Verriegelungskörper (38) in seine Verriegelungsstellung (V) belastende, ohnehin vorhandene Federanordnung (50) den mindestens einen Sperrkörper (64) über das Sperr-Betätigungsglied (54) in seine Sperrstellung (S) und zusätzlich auch das Sperr-Betätigungsglied (54) in seine Sperrstellung (S) belastet, ohne dass für die Sperreinrichtung, die das Sperr-Betätigungsglied und den mindestens einen Sperrkörper umfasst, eine zusätzliche Feder oder Federanordnung erforderlich ist.

2. Anhängekupplung nach Anspruch 1, **dadurch gekennzeichnet, dass** das Entsperr-Betätigungsglied (54) eine Übertragungsfläche (86), insbesondere einen Radial- oder Flanschvorsprung, zur Übertragung einer Stellkraft der Federanordnung (50) auf den Verriegelungskörper (38) in Richtung seiner Verriegelungsstellung (V) aufweist.

3. Anhängekupplung nach Anspruch 1 oder 2, **dadurch gekennzeichnet, dass** der mindestens eine Sperrkörper (64) ein Formschlusselement, insbesondere eine Sperrkugel oder ein ·Sperrwälzelement, umfasst und/oder dass der mindestens eine Sperrkörper (64) an dem Verriegelungskörper (38) insbesondere linear beweglich gelagert ist.

4. Anhängekupplung nach einem der vorhergehenden Ansprüche, **dadurch gekennzeichnet, dass** die den Verriegelungskörper (38) in seine Verriegelungsstellung (V) belastende Federanordnung (50) sich direkt an dem Sperr-Betätigungsglied (54) abstützt und/oder dass die Federanordnung (50) ohne eine zwischen dem Sperr-Betätigungsglied (54) und dem Verriegelungskörper (38) angeordnete Federeinrichtung auf das Sperr-Betätigungsglied (54) wirkt.

5. Anhängekupplung nach einem der vorhergehenden Ansprüche, **dadurch gekennzeichnet, dass** das Sperr-Betätigungsglied (54) an dem Verriegelungskörper (38) und/oder einem den Verriegelungskörper (38) insbesondere linear führenden Führungskanal (39) geführt ist und/oder dass das Sperr-Betätigungsglied (54) eine Schrägfläche, insbesondere mindestens eine wannenartige oder kuhlenartige Vertiefung (73), zum Betätigen des mindestens einen Sperrkörpers (64) in die Sperrstellung (S) aufweist.

6. Anhängekupplung nach einem der vorhergehenden Ansprüche, **dadurch gekennzeichnet, dass** sie eine Kopplungsanordnung (55) zu einer Kopplung des Verriegelungskörpers (38) und des Sperr-Betätigungsglieds (54) mit dem Betätigungsorgan (23) aufweist, so dass bei einer Entriegelungsbetätigung des Betätigungsorgans (23) zuerst das Sperr-Betätigungsglied (54) den mindestens einen Sperrkörper (64) in seine Freigabestellung (F) verstellt oder zu einer Verstellung in die Freigabestellung (F) freigibt und danach das Betätigungsorgan (23) den Verriegelungskörper (38) in Richtung der Entriegelungsstellung (E) verstellt.

7. Anhängekupplung nach Anspruch 6, **dadurch gekennzeichnet, dass** die Kopplungsanordnung (55) den Verriegelungskörper (38) mit dem Sperr-Betätigungsglied (54) in Betätigungsrichtung, insbesondere in einer Zugrichtung (66), des Betätigungsorgans (23) mit einem Freigang zwischen dem Verriegelungskörper (38) und dem Sperr-Betätigungsglied (54) koppelt, wobei die Kopplungsanordnung (55) zweckmäßigerweise einen insbesondere am Entsperr-Betätigungsglied (54) angeordneten oder durch diese gebildeten Zuganker (79) mit einer Halteaufnahme aufweist, in der ein Halteglied (69), insbesondere ein Querbolzen, mit Spiel bezüglich einer Zugrichtung (66) aufgenommen ist.

8. Anhängekupplung nach einem der Ansprüche 6 oder 7, **dadurch gekennzeichnet, dass** die Kopplungsanordnung (55) in einem Innenraum (81) des Verriegelungskörpers (38) und/oder in einem Innenraum des Sperr-Betätigungsglieds (54) angeordnet ist.

9. Anhängekupplung nach einem der vorhergehenden Ansprüche, **dadurch gekennzeichnet, dass** der Kupplungsarm (15) an den Halter (13) ansteckbar ist oder dass der Kupplungsarm (15) an dem Halter (13) drehbar und/oder verschieblich gelagert ist.

10. Anhängekupplung nach einem der vorhergehenden Ansprüche, **dadurch gekennzeichnet, dass** zum Verriegeln und Fixieren des Kupplungsarms (15) am Halter (13) Formschlusskonturen (31, 32) an dem Halter (13) und einem an dem Halter (13) beweglich gelagerten Arm-Lagerteil (18) des Kupplungsarms (15) angeordnet sind, und dass die Verriegelungseinrichtung (22) zum Verstellen der Formschlusskonturen (31, 32) zueinander, insbesondere zum Verstellen der Formschlusskonturen (32) des Arm-Lagerteils (18) in Richtung des Halters (13), ausgestaltet ist derart, dass die Formschlusskonturen (31, 32) in der Verriegelungsstellung (V) formschlüssig ineinander greifen und in der Entriegelungsstellung (E) voneinander entfernt sind und eine Bewegung des Kupplungsarms (15) zulassen.

11. Anhängekupplung nach einem der vorhergehenden Ansprüche, **dadurch gekennzeichnet, dass** die Verriegelungseinrichtung (22) mindestens ein beweglich gelagertes Verrieglungselement (56) aufweist, das durch den Verriegelungskörper (38), der insbesondere einen Verdrängerkörper (40) bildet, in eine Verriegelungsstellung (V) zur Verriegelung des Kupplungsarms (15) am Halter (13) verstellbar ist.

12. Anhängekupplung nach einem der Ansprüche 9 bis 11, **dadurch gekennzeichnet, dass** der Kupplungsarm (15) an dem Halter (13) über eine Hohlwellen-Lageranordnung (17) beweglich gelagert ist, bei der ein Lagerteil (18) auf einer Hohlwelle (37) beweglich, insbesondere schiebebeweglich und/oder drehbeweglich, gelagert ist, dass der Verriegelungskörper (38) in einem Innenraum (36) der Hohlwelle (37) beweglich aufgenommen ist, dass das mindestens eine Verrieglungselement (56) in einem Führungskanal der Hohlwelle (37) zwischen dem Innenraum (36) und einer Außenfläche (58) des Hohlwelle (37) beweglich gelagert ist, und dass der Verriegelungskörper (38) in der Verriegelungsstellung (V) das mindestens eine Verrieglungselement (56) durch den Führungskanal nach außen verdrängt, so dass das mindestens eine Verrieglungselement (56) teilweise vor die Außenfläche (58) vorsteht und gegen das Lagerteil (18) wirkt.

13. Anhängekupplung nach Anspruch 12, **dadurch gekennzeichnet, dass** die Hohlwelle (37) mit dem Halter (13) und das Lagerteil (18) mit dem Kupplungsarm (15) verbunden oder einstückige Bauteile sind und/oder dass das mindestens eine teilweise vor die Lagerfläche vorstehende Verrieglungselement (56) das Lagerteil (18) an der Hohlwelle (37) verstellt, so dass mindestens eine mit dem Lagerteil (18) fest verbundene Formschlusskontur (31, 32) in eine mit der Hohlwelle (37) fest verbundene Formschlusskontur (31, 32) formschlüssig verriegelnd eingreift.

14. Anhängekupplung nach einem der vorhergehenden Ansprüche, **dadurch gekennzeichnet, dass** die Verriegelungseinrichtung (22), insbesondere das Sperr-Betätigungsglied (54), zumindest teilweise oder vollständig geschützt in einem Innenraum (36) des Halters (13) und/oder einem Innenraum (36) einer den Kupplungsarm (15) am Halter (13) beweglich lagernden Lageranordnung (17) und/oder in dem Kupplungsarm (15) angeordnet ist.

15. Anhängekupplung nach einem der vorhergehenden Ansprüche, **dadurch gekennzeichnet, dass** das Betätigungsorgan (23) ein Zugorgan (24) für eine Zugbetätigung ist und/oder dass das Betätigungsorgan (23) zumindest abschnittsweise flexibel ist, und insbesondere einen Seilzug oder einen Bowdenzug (28) umfasst und/oder dass sie eine Handbetätigungseinrichtung (25) zur manuellen Betätigung des Betätigungsorgans (23) und/oder einen motorischen Löseantrieb zur Betätigung des Betätigungsorgans (23) aufweist.

## Claims

1. Trailer coupling with a coupling arm (15) for the coupling of a trailer (11), and a holder (13) attachable to a motor vehicle (12), in particular a car, for holding the coupling arm (15), with a locking device (22) which has a locking body (38) spring-loaded by a spring assembly (50) in a locking position (V) for locking and immovable fixing of the coupling arm (15) to the holder (13), wherein the locking body (38) is adjustable by means of an unlocking operation with an actuating organ (23) from the locking position (V) into an unlocked position (E) in which the coupling arm (15) is movable relative to the holder (13), and wherein the locking device (22) has at least one blocking body (64), adjustable between a release position (F) and a blocked position (S) and actuable by a blocking actuation member (54), for blocking a movement of the locking body (38) from the locking position (V) into the unlocking position (E), **characterised in that** the spring assembly (50) which is present in any case and biases the locking body (38) into its locking position (V), biases the blocking body or bodies (64) via the blocking actuation member (54) into its or their blocking position (S) and also biases the blocking actuation member (54) into its blocking position (S), without the need for the blocking device, which includes the blocking actuation member and the blocking body or bodies, to have any additional spring or spring assembly.

2. Trailer coupling according to claim 1, **characterised in that** the blocking actuation member (54) has a transmission face (86), in particular a radial or flanged projection, for transmitting an actuating force of the spring assembly (50) to the locking body (38) in the direction of it locking position (V).

3. Trailer coupling according to claim 1 or 2, **characterised in that** the blocking body or bodies (64) comprises or comprise an interlocking element, in particular a blocking ball or a blocking roller element, and/or that the blocking body or bodies (64) is or are mounted on the locking body (38) so as to be movable, in particular linearly.

4. Trailer coupling according to any of the preceding claims, **characterised in that** the spring assembly (50) biasing the locking body (38) towards its locking position (V) rests directly on the blocking actuation member (54), and/or that the spring assembly (50) acts on the blocking actuation member (54) without a spring device provided between the blocking actuation member (54) and the locking body (38).

5. Trailer coupling according to any of the preceding claims, **characterised in that** the blocking actuation member (54) is guided on the locking body (38) and/or a guide channel (39) guiding the locking body (38), in particular in a linear direction, and/or that the blocking actuation member (54) has an inclined surface, in particular at least one trough-like or well-like recess (73), for actuating the blocking body or bodies (64) into the blocked position (S).

6. Trailer coupling according to any of the preceding claims, **characterised in that** it has a coupling arrangement (55) for connecting the locking body (38) and the blocking actuation member (54) to the actuating organ (23) so that, during an unlocking operation of the actuating organ (23), firstly the blocking actuation member (54) adjusts the blocking body or bodies (64) into the release position (F) or releases for an adjustment into the release position (F), and then the actuating organ (23) adjusts the locking body (38) in the direction of the unlocking position (E).

7. Trailer coupling according to claim 6, **characterised in that** the coupling arrangement (55) connects the locking body (38) to the blocking actuation member (54) in the direction of actuation, in particular in a direction of pulling (66), of the actuating organ (23), with a clearance between the locking body (38) and the blocking actuation member (54), wherein the coupling arrangement (55) expediently has a tension rod (79), in particular provided on of formed by the blocking actuation member (54), with a retaining socket, in which a holding member (69), in particular a lateral pin, is held with play relative to a direction of pulling (66).

8. Trailer coupling according to any of claims 6 or 7, **characterised in that** the coupling arrangement (55) is located in an internal space (81) of the locking body (38) and/or in an internal space of the unlocking actuating member (54).

9. Trailer coupling according to any of the preceding claims, **characterised in that** the coupling arm (15) may be affixed to the holder (13) or that the coupling arm (15) is mounted on the holder (13) with the ability to rotate or slide.

10. Trailer coupling according to any of the preceding claims, **characterised in that** for locking and fixing the coupling arm (15) on the holder (13), form-fitting contours (31, 32) are provided on the holder (13) and on an arm bearing section (18) of the coupling arm (15) mounted movably on the holder (13), and that the locking device (22) for adjusting the form-fitting contours (31, 32) to one another, in particular for shifting the form-fitting contours (32) of the arm bearing section (18) towards the holder (13), is so designed that the form-fitting contours (31, 32) in the locking position (V) engage positively in one another, and in the unlocked position (E) are removed from one another and allow movement of the coupling arm (15).

11. Trailer coupling according to any of the preceding claims, **characterised in that** the locking device (22) has at least one movably mounted locking element (56) which, by means of the locking body (38), which forms in particular a displacer body (40), may be shifted into a locking position (V) to lock the coupling arm (15) to the holder (13).

12. Trailer coupling according to any of claims 9 to 11, **characterised in that** the coupling arm (15) is movably mounted on the holder (13) via a hollow shaft bearing assembly (17), in which a bearing section (18) is mounted movably, in particular able to slide and/or rotate, on a hollow shaft (37), that the locking body (38) is accommodated movably in an internal space (36) of the hollow shaft (37), that the locking element or elements (56) is or are movably mounted in a guide channel of the hollow shaft (37) between the internal space (36) and an outer surface (58) of the hollow shaft (37), and that the locking body (38) in the locking position (V) drives the locking element or elements (56) outwards through the guide channel, so that the locking element or elements (56) protrude in part beyond the outer surface (58) and act against the' bearing section (18).

13. Trailer coupling according to claim 12, **characterised in that** the hollow shaft (37) and the holder (13), and the bearing section (18) and the coupling arm (15), are in each case connected or are single-piece components, and/or that the locking element or elements (56) protruding in part beyond the bearing face adjusts/adjust the bearing section (18) at the hollow shaft (37), so that at least one form-fitting contour (31, 32) permanently joined to the bearing section (18) engages with positive locking in a form-fitting contour (31, 32) permanently joined to the hollow shaft (37).

14. Trailer coupling according to any of the preceding claims, **characterised in that** locking device (22), in particular the blocking actuation member (54), is mounted, completely or at least partly protected, in an internal space (36) of the holder (13) and/or an internal space (36) of a bearing assembly (17) movably supporting the coupling arm (15) on the holder (13), and/or in the coupling arm (15).

15. Trailer coupling according to any of the preceding claims, **characterised in that** the actuating organ (23) is a towing organ (24) for a towing operation and/or that the actuating organ (23) is flexible at least in sections, and in particular comprises a wire rope or a control cable (28), and/or has a manual actuation device (25) for manual actuation of the actuating organ (23) and/or a powered release drive to actuate the actuating organ (23).

## Revendications

1. Attelage avec un bras d'attelage (15) pour l'attelage d'une remorque (11) et avec un support (13) pouvant être fixé sur un véhicule automobile (12), en particulier un véhicule automobile pour le maintien du bras d'attelage (15), avec un dispositif de verrouillage (22) qui présente un corps de verrouillage (38) sollicité par ressort par un ensemble de ressort (50) dans une position de verrouillage (V) pour le verrouillage et la fixation du bras d'attelage (15) sur le support (13), le corps de verrouillage (38) pouvant être réglé par un actionnement de déverrouillage avec un organe d'actionnement (23) de la position de verrouillage (V) à une position de déverrouillage (E), dans laquelle le bras d'attelage (15) est mobile par rapport au support (13) et le dispositif de verrouillage (22) présentant au moins un corps de verrouillage (64) actionnable par un organe d'actionnement de verrouillage, pouvant être déplacé entre une position de libération (F) et une position de verrouillage (S) pour le verrouillage d'un mouvement du corps de verrouillage (38) de la position de verrouillage (V) à la position de déverrouillage (E), **caractérisé en ce que** l'ensemble de ressort (50) présent de toute façon, sollicitant le corps de verrouillage (38) dans sa position de verrouillage (V) sollicite l'au moins un corps de verrouillage (64) par le biais de l'organe d'actionnement de verrouillage (54) dans sa position de verrouillage (S) et en outre aussi l'organe d'actionnement de verrouillage (54) dans sa position de verrouillage (S) sans que pour le dispositif de verrouillage qui comporte l'organe d'actionnement de verrouillage et l'au moins un corps de verrouillage, un ressort supplémentaire ou ensemble de ressort ne soit nécessaire.

2. Attelage selon la revendication 1, **caractérisé en ce que** l'organe d'actionnement de déverrouillage (54) présente une surface de transmission (86), en particulier une saillie radiale ou de bride pour la transmission d'une force de réglage de l'ensemble de ressort (50) sur le corps de verrouillage (38) en direction de sa position de verrouillage (V).

3. Attelage selon la revendication 1 ou 2, **caractérisé en ce que** l'au moins un corps de verrouillage (64) comporte un élément à complémentarité de formes, en particulier une bille de verrouillage ou un élément roulant de verrouillage et/ou **en ce que** l'au moins un corps de verrouillage (64) est logé en particulier de manière mobile linéairement sur le corps de verrouillage (38).

4. Attelage selon l'une quelconque des revendications précédentes, **caractérisé en ce que** l'ensemble de ressort (50) sollicitant le corps de verrouillage (38) dans sa position de verrouillage (V) s'appuie directement sur l'organe d'actionnement de verrouillage (54) et/ou **en ce que** l'ensemble de ressort (50) agit sans dispositif de ressort disposé entre l'organe d'actionnement de verrouillage (54) et le corps de verrouillage (38) sur l'organe d'actionnement de verrouillage (54).

5. Attelage selon l'une quelconque des revendications précédentes, **caractérisé en ce que** l'organe d'actionnement de verrouillage (54) est guidé sur le corps de verrouillage (38) et/ou un canal de guidage (39) guidant en particulier linéairement le corps de verrouillage (38) et/ou **en ce que** l'organe d'actionnement de verrouillage (54) présente une surface oblique, en particulier au moins une cavité (73) de type cuvette ou creux pour l'actionnement de l'au moins un corps de verrouillage (64) dans la position de verrouillage (5).

6. Attelage selon l'une quelconque des revendications précédentes, **caractérisé en ce qu'**il présente un ensemble de couplage (55) pour un couplage du corps de verrouillage (38) et de l'organe d'actionnement de verrouillage (54) avec l'organe d'actionnement (23) de sorte que pour un actionnement de déverrouillage de l'organe d'actionnement (23), l'organe d'actionnement de verrouillage (54) déplace en premier lieu l'au moins un corps de verrouillage (64) dans sa position de libération (F) ou le libère pour un déplacement dans la position de libération (F) et l'organe d'actionnement (23) déplace ensuite le corps de verrouillage (38) en direction de la position de déverrouillage (E).

7. Attelage selon la revendication 6, **caractérisé en ce que** l'ensemble de couplage (55) couple le corps de verrouillage (38) avec l'organe d'actionnement de verrouillage (54) dans le sens d'actionnement, en particulier dans un sens de traction (66) de l'organe d'actionnement (23) avec un accès libre entre le corps de verrouillage (38) et l'organe d'actionnement de verrouillage (54), l'ensemble de couplage (55) présentant de manière appropriée un tirant (79) disposé en particulier sur l'organe d'actionnement de déverrouillage (54) ou formé par celui-ci avec un logement de retenue, dans lequel un organe de retenue (69), en particulier un boulon transversal, est reçu avec jeu par rapport à un sens de traction (66).

8. Attelage selon l'une quelconque des revendications 6 ou 7, **caractérisé en ce que** l'ensemble de couplage (55) est disposé dans un espace intérieur (81) du corps de verrouillage (38) et/ou dans un espace intérieur de l'organe d'actionnement de verrouillage (54).

9. Attelage selon l'une quelconque des revendications précédentes, **caractérisé en ce que** le bras d'attelage (15) peut être rattaché au support (13) ou **en ce que** le bras d'attelage (15) est logé de manière rotative et/ou mobile sur le support (13).

10. Attelage selon l'une quelconque des revendications précédentes, **caractérisé en ce que** pour le verrouillage et la fixation du bras d'attelage (15) sur le support (13), des contours à complémentarité de formes (31, 32) sont disposés sur le support (13) et une partie de palier de bras (18) logée de manière mobile sur le support (13) du bras d'attelage (15) et **en ce que** le dispositif de verrouillage (22) est configuré pour le déplacement des contours à complémentarité de formes (31, 32) l'un par rapport à l'autre en particulier pour le déplacement des contours à complémentarité de formes (32) de la partie de palier de bras (18) en direction du support (13) de telle manière que les contours à complémentarité de formes (31, 32) s'engagent par complémentarité de formes dans la position de verrouillage (V) et soient éloignés dans la position de déverrouillage (E) et permettent un déplacement du bras d'attelage (15).

11. Attelage selon l'une quelconque des revendications précédentes, **caractérisé en ce que** le dispositif de verrouillage (22) présente au moins un élément de verrouillage (56) logé de manière mobile qui peut être déplacé par le corps de verrouillage (38) qui forme en particulier un corps de déplacement, (40) dans une position de verrouillage (V) pour le verrouillage du bras d'attelage (15) sur le support (13).

12. Attelage selon l'une quelconque des revendications 9 à 11, **caractérisé en ce que** le bras d'attelage (15) est logé de manière mobile sur le support (13) par un agencement de palier à arbre creux (17) pour lequel une partie de palier (18) est logée de manière mobile, en particulier coulissante et/ou rotative sur un arbre creux (37), **en ce que** le corps de verrouillage (38) est reçu de manière mobile dans un espace intérieur (36) de l'arbre creux (37), **en ce que** l'au moins un élément de verrouillage (56) est logé de manière mobile dans un canal de guidage de l'arbre creux (37) entre l'espace intérieur (36) et une surface extérieure (58) de l'arbre creux (37), et **en ce que** le corps de verrouillage (38) déplace vers l'extérieur dans la position de verrouillage (V) l'au moins un élément de verrouillage (56) par le canal de guidage de sorte que l'au moins un élément de verrouillage (56) dépasse en partie de la surface extérieure (58) et agisse contre la partie de palier (18).

13. Attelage selon la revendication 12, **caractérisé en ce que** l'arbre creux (37) est relié au support (13) et la partie de palier (18) est reliée au bras d'attelage (15) ou sont des composants d'un seul tenant et/ou **en ce que** l'au moins un élément de verrouillage (56) dépassant en partie de la surface de palier déplace la partie de palier (18) sur l'arbre creux (37) de sorte qu'au moins un contour à complémentarité de formes (31, 32) relié fixement à la partie de palier (18) s'engage par verrouillage à complémentarité de formes dans un contour à complémentarité de formes (31, 32) relié fixement à l'arbre creux (37).

14. Attelage selon l'une quelconque des revendications précédentes, **caractérisé en ce que** le dispositif de verrouillage (22), en particulier l'organe d'actionnement de verrouillage (54) est disposé au moins en partie ou complètement protégé dans un espace intérieur (36) du support (13) et/ou dans un espace intérieur (36) d'un ensemble de palier (17) logeant de manière mobile le bras d'attelage (15) sur le support (13) et/ou dans le bras d'attelage (15).

15. Attelage selon l'une quelconque des revendications précédentes, **caractérisé en ce que** l'organe d'actionnement (23) est un organe de traction (24) pour un actionnement de traction et/ou **en ce que** l'organe d'actionnement (23) est flexible au moins par section et comporte en particulier un câble de traction ou un câble Bowden (28) et/ou **en ce qu'**il présente un dispositif d'actionnement à main (25) pour l'actionnement manuel de l'organe d'actionnement (23) et/ou un entraînement de détachement motorisé pour l'actionnement de l'organe d'actionnement (23).
